# EUROPÄISCHE PATENTSCHRIFT

(11) **EP 1 225 095 B1**
(45) Veröffentlichungstag und Bekanntmachung des Hinweises auf die Patenterteilung: **30.03.2005**
(21) Anmeldenummer: 01101124.4
(22) Anmeldetag: 19.01.2001
(51) Int. Cl.: B60R 11/02

(54) **Einbaugerät mit Haltefeder**
Built-in apparatus with retaining spring
Appareil à encastrer avec ressort de retenue

(43) Veröffentlichungstag der Anmeldung: 24.07.2002
(73) Patentinhaber: Siemens Aktiengesellschaft, 80333 München (DE)
(72) Erfinder: Lebreton, Christophe, Saint Fargeau-Pontierry (FR)

(56) Entgegenhaltungen:
- DE-A- 3 811 364
- DE-C- 3 831 317
- DE-C- 3 906 216
- US-A- 5 366 186

## Beschreibung

Die Erfindung betrifft ein in eine Einbauöffnung, beispielsweise eine Armaturentafel, zu montierendes Einbaugerät, welches an zwei gegenüberliegenden Seiten jeweils mit einer Haltefeder fest verbunden ist, die jeweils zumindest einen Federarm hat, der eine in eine ortsfeste Anlagekante verrastende, derart schräg zur Einschubrichtung des Einbaugerätes ausgerichtete Rastnase aufweist, dass durch die federnde Anlage der Rastnase an die Anlagekante das Einbaugerät in Einschubrichtung vorgespannt und seine Einbaulage durch eine Anschlagfläche festgelegt ist, gegen die das Einbaugerät oder ein mit ihm fest verbundenes Bauteil im Einbauzustand anliegt, wobei zusätzlich zur Rastnase an dem Federarm der Haltefeder in Einschubrichtung des Einbaugerätes gesehen hinter der Rastnase zumindest eine federnde Fangnase vorgesehen ist, welche beim Herausbewegen des Einbaugerätes aus der Einbauöffnung nach einer Freigabe der Rastnase mit einer steilen Fangfläche formschlüssig gegen die für die Rastnase bestimmte Haltefläche zu gelangen vermag und diese hintergreift.

Bei Einbaugeräten der vorstehenden Art handelt es sich in heutigen Kraftfahrzeugen um Autoradios, CD- oder Kassettenabspielgeräte oder Navigationsgeräte. Sie sind deshalb allgemein bekannt. Ein Einbaugerät gemäß dem Oberbegriff des Anspruchs 1 ist in der US PS 5,366,186 beschrieben. Meist dient eine Einbauöffnung in der Armaturentafel oder einer Fahrzeugmittelkonsole zur Aufnahme eines solchen Gerätes. Da die Verrastung des Einbaugerätes in der Einbauöffnung oder des darin befestigten Einbaurahmens erfolgt, kommt es zu Maßabweichungen aufgrund von Toleranzen, welche außerhalb des Einflussbereiches des Herstellers des Einbaugerätes liegen.

Deshalb sollte die schräge Rastnase so bemessen und ausgerichtet sein, dass sie eine relativ große Toleranzbreite auszugleichen vermag. Dem sind jedoch relativ enge Grenzen gesetzt, weil sich beim Ausfedern der die jeweilige Rastnase tragenden Federarme die Winkellage der Rastnase und das Hebelverhältnis für den Kraftangriff verändert. Das kann in ungünstigen Fällen dazu führen, dass das Einbaugerät aus der Einbauöffnung herausgelangt, wenn ein anderes Fahrzeug mit großer Wucht gegen das Heck des eigenen Fahrzeugs prallt. Das Einbaugerät gemäß der US PS besitzt dazu eine Fangnase, die aus zwei zusätzlichen Federblättern zu beiden Seiten der Rastnase besteht. Die Enden haben in der Einbauposition einen kleinen Abstand zur Rückseite des Einbaurahmens und stoßen stumpf gegen diesen, wenn hohe Trägheitskräfte infolge eines Heckaufpralles auf das Einbaugerät wirken. Dabei können die Federblätter ausknicken, wobei die stumpfen Enden den Kontakt zum Einbaurahmen verlieren, so dass das Einbaugerätes nicht mehr im Rahmen gehalten ist.

Der Erfindung liegt das Problem zugrunde, ein Einbaugerät der eingangs genannten Art so auszubilden, dass seine Haltefedern möglichst große Toleranzen auszugleichen vermögen, ohne dass bei einem Heckaufprall die Gefahr besteht, dass das Einbaugerät infolge von Trägheitskräften aus der Einbauöffnung herausfliegt.

Dieses Problem wird erfindungsgemäß dadurch gelöst, dass die Fangnase an einer Längsseite des Federarmes durch einen umgebogenen Bereich gebildet ist und dass die Fangnase an der Einschubseite eine flach ansteigende Abweisflanke und daran anschließend die steile Fangfläche hat.

Mit einer solchen Ausgestaltung der Fangnase wird erreicht, dass die Fangfläche quer zur Einschubrichtung deutlich ausgedehnter ist, so dass ein Abrutschen der Fangnase nicht zu befürchten ist. Durch den umgebogenen Bereich der Haltefeder wird diese versteift, so dass ein Ausknicken auch bei hohen Kräften nicht zu erwarten ist. Durch diese erfindungsgemäße Maßnahme wird das Einbaugerät auch bei einem Heckaufprall sicher im Einbaurahmen gehalten.

Auch bei einer solchen Fangnase braucht bei der Bemessung der Rastnase nicht mehr darauf Rücksicht genommen zu werden, ob diese bei einem Heckaufprall noch in der Lage ist, das Einbaugerät in der Einbauöffnung zu halten. Man kann die Fangnase ausschließlich danach auslegen, dass sie das Einbaugerät bei allen auftretenden Toleranzen noch mit ausreichender Kraft in die Einbauöffnung hineinzieht. Wenn dadurch ihre Schräglage so steil wird, dass die Fangnase bei Kräften entgegengesetzt zur Einschubrichtung von selbst aus der Rastausnehmung schwenkt, ist das durch die erfindungsgemäße Anordnung der Fangnase unerheblich, weil diese dann anstelle der Rastnase dafür sorgt, dass das Einbaugerät zuverlässig in der Einbauöffnung verbleibt.

Die erfindungsgemäße Konstruktion ist darüber hinaus besonders einfach gestaltet, da die Fangnase an einer Längsseite des Federarmes durch einen umgebogenen Bereich gebildet ist.

Auch die Montage des Einbaugerätes ist besonders einfach, weil die jeweilige Fangnase zum Passieren der Rastausnehmungen von selbst auszuweichen vermag, da die Fangnase an der Einschubseite eine flach ansteigende Abweisflanke und daran anschließend die steile Fangfläche hat.

Die Federarme werden beim Einschieben des Einbaugerätes in die Einbauöffnung und beim Halten des Einbaugerätes im Falle eines Heckaufpralls symmetrisch belastet, wenn an beiden Längsseiten des Federarmes jeweils eine Fangnase vorgesehen ist. Weiterhin ergibt sich durch diese Gestaltung eine besonders hohe Haltekraft der Fangnasen.

Die Rastnase vermag auch bei ungünstigen Winkelverhältnissen relativ hohen Kräften zu widerstehen und bewegt sich deshalb nicht selbsttätig von der Anlagekante weg, wenn sie auf ihrer im verrasteten Zustand gegen die Anlagekante der Rastausnehmung anliegenden Fläche mit Mittel zur Erhöhung der Haltekraft bei einer entgegengesetzt der Einschubrichtung auf das Einbaugerät wirkenden Kraft versehen ist.

Besonders günstig ist es hierbei, wenn die Mittel zur Erhöhung der Haltekraft durch parallel zueinander und zur Anlagekante verlaufende Rillen in der Fläche der Rastnase gebildet sind.

Das Einbaugerät schließt auch bei sehr ungünstigen Toleranzketten zwangsläufig bündig mit der Armaturentafel oder der sonstigen, seine Einbauöffnung umgebenden Kontur ab, wenn das Einbaugerät mit einem Frontteil unmittelbar gegen einen als Anschlagfläche dienenden Randbereich der Einbauöffnung anliegt. Bei dem Frontteil kann es sich um ein Bedienteil, ein Display oder beispielsweise um einen Frontrahmen handeln. Durch diese Gestaltung wird die genaue Lage des Einbaugerätes nicht mehr von einer Vielzahl von Toleranzen bestimmt, auf die der Hersteller des Einbaugerätes keinen Einfluss hat, vielmehr gelangt der Frontrahmen jeweils in genau diejenige Stellung, die für die Optik des montierten Einbaugerätes optimal ist.

Die Kräfte zum Verrasten in Einbaustellung und Auffangen des Einbaugerätes bei einem Heckaufprall werden optimal in die Haltefeder eingeleitet und beanspruchen diese nicht unzulässig stark, wenn gemäß einer anderen Weiterbildung der Erfindung die Haltefeder symmetrisch aufgebaut ist und zu beiden Seiten einer in Einschubrichtung verlaufenden Symmetrieachse jeweils einen Federarm mit der Rastnase und der Fangnase aufweist, wobei jeweils das freie Ende der beiden Federarme zur der Einschubrichtung entgegengesetzten Seite weist.

Das Einbaugerät wird auch quer zu seiner Haupterstreckungsebene in der Einbauöffnung federnd und damit klapperfrei fixiert, wenn an der der Einschubseite entgegengesetzten Seite auf der Symmetrieachse und damit zwischen den Federarmen eine im montierten Zustand des Einbaugerätes federnd gegen eine Fläche der Einbauöffnung anliegende Federzunge vorspringt.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1:: einen schematischen, horizontalen Schnitt durch einen Teilbereich einer Armaturentafel mit einem montierten Einbaugerät,
- Fig. 2:: eine perspektivische Ansicht einer Haltefeder des Einbaugerätes,
- Fig. 3:: einen Blick auf eine Schmalseite der Haltefeder,
- Fig. 4:: eine gegenüber Figur 1 im Maßstab vergrößerte Schnittdarstellung des Bereiches der an der Armaturentafel verrasteten Haltefeder,
- Fig. 5:: die Anordnung nach Figur 4 in einem sich nach einem Heckaufprall ergebenden Zustand.

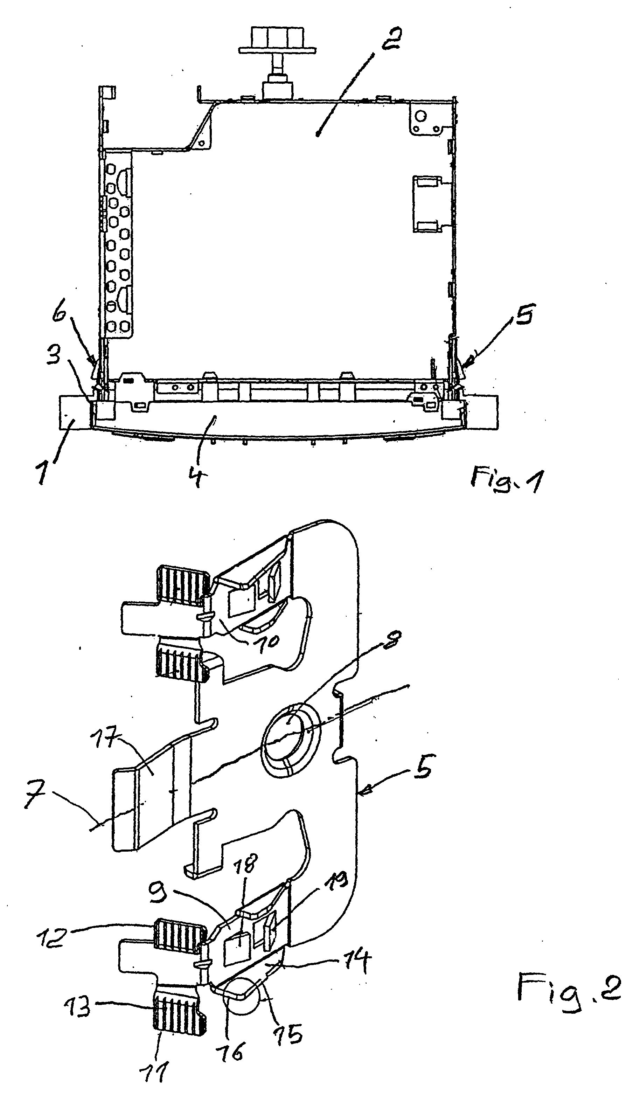

Die Figur 1 zeigt einen Teilbereich einer Armaturentafel 1, welche zur Aufnahme eines Einbaugerätes 2 eine Einbauöffnung 3 aufweist. Diese Einbauöffnung 3 wird nach vorn hin von einem Frontteil 4 des Einbaugerätes 2 abgedeckt. Bei dem Frontteil 4 kann es sich beispielsweise um ein Bedienteil eines Radios handeln. An beiden Schmalseiten des Einbaugerätes 2 ist an diesem jeweils eine Haltefeder 5, 6 befestigt, die dazu dient, das Einbaugerät 2 in der Einbauöffnung 3 zu halten und eine Montage allein durch Einschieben des Einbaugerätes 2 in die Einbauöffnung 3 zu ermöglichen.

Die Figur 2 verdeutlicht am Beispiel der Haltefeder 5 die genaue Gestaltung der beiden Haltefedern 5, 6. Die Haltefeder 5 ist zu einer Symmetrieachse 7 symmetrisch aufgebaut. Sie hat einen mittigen, konisch ausgeführten Durchlass 8, der es ermöglicht, die Haltefeder 5 durch eine nicht gezeigte Schraube mit dem Einbaugerät 2 zu verbinden. Zu beiden Seiten der Symmetrieachse 7 hat die Haltefeder 5 jeweils einen Federarm 9, 10, dessen freies Ende sich an der der Einschubrichtung entgegengesetzten Seite befindet. Nahe des jeweils freien Endes jedes Federarmes 9, 10 hat dieser jeweils zwei schräg verlaufende Rastnasen 11, 12, die in ihrer nach vorn weisenden Fläche mehrere, parallel zueinander verlaufende Rillen 13 aufweisen.

Wichtig für die Erfindung ist, dass auf den Federarmen 9, 10 in Einschubrichtung gesehen hinter den Rastnasen 11, 12 jeweils zumindest eine Fangnase 14 angeordnet ist, die bei diesem Ausführungsbeispiel jeweils am Rand des Federarmes 9, 10 durch einen umgebogenen Bereich gebildet ist. Die Fangnase 14 hat nach hinten hin eine flach ansteigende Abweisflanke 15 und daran anschließend zur Seite der Rastnasen 11, 12 hin eine steil abfallende Fangfläche 16. Symmetrisch zwischen den beiden Federarmen 9, 10 springt nach vom hin eine Federzunge 17 vor, die dazu dient, das Einbaugerät 2 federnd in eine Mittelstellung innerhalb der Einbauöffnung 3 zu halten.

Auf den Federarmen 9, 10 erkennt man weiterhin jeweils zwei schräg ausgestellte Lappen 18, 19, die dazu dienen, ein nicht gezeigtes Entriegelungswerkzeug mit dem jeweiligen Federarm 9, 10 zu verbinden, wenn man die Rastnasen 11, 12 entrasten und das Einbaugerät 2 demontieren will.

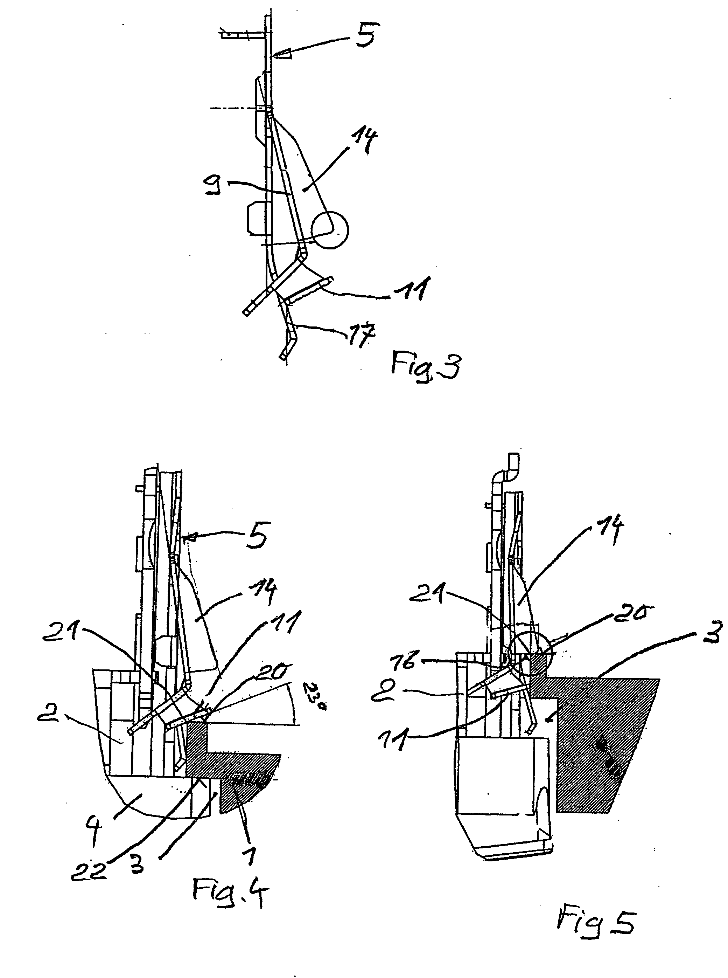

Die Figur 3 dient der zusätzlichen Verdeutlichung der Gestaltung der Haltefeder 5. Zu erkennen sind insbesondere der Federarm 9 mit der Fangnase 14 und der Rastnase 11. Weiterhin ist die nach vorn vorspringende Federzunge 17 zu sehen.

Die Figur 4 zeigt, wie das Einbaugerät 2 durch die Haltefeder 5 in der Einbauöffnung 3 der Armaturentafel 1 gehalten wird. Zu erkennen ist, dass die Armaturentafel 1 im Bereich der Einbauöffnung 3 zur Rückseite hin eine Anlagefläche 20 hat, die zur Einbauöffnung 3 hin durch eine Anlagekante 21 begrenzt wird. Gegen diese Anlagekante 21 liegt die Rastnase 11 bei diesem Ausführungsbeispiel unter einem Winkel von etwa 23° an und spannt dadurch das Einbaugerät 2 in Einschubrichtung vor. Das Frontteil 4 liegt unmittelbar gegen einen vorderen Randbereich 22 der Einbauöffnung 3 an und wird durch die Kraft der Rastnase 11 in dieser Position gehalten. Die Figur 4 zeigt weiterhin die Fangnase 14, die jedoch in der gezeigten Einbauposition zunächst keine Bedeutung hat.

In Figur 5 wird die Position des Einbaugerätes 2 nach einem Heckaufprall gezeigt. Zu erkennen ist, dass sich die Rastnase 11 von der Anlagekante 21 entfernt hat, so dass das Einbaugerät 2 eine geringfügig aus der Einbauöffnung 3 vorspringende Position einnimmt. Die Fangnase 14 liegt dabei mit ihrer Fangfläche 16 gegen die Haltefläche 20 an und sichert dadurch das Einbaugerät 2 davor, vollständig aus der Einbauöffnung 3 herausgelangen zu können.

## Patentansprüche

1. In eine Einbauöffnung eines Kraftfahrzeugs, beispielsweise eine Armaturentafel, zu montierendes Einbaugerät, welches an zwei gegenüberliegenden Seiten jeweils mit einer Haltefeder fest verbunden ist, die jeweils zumindest einen Federarm hat, der eine in eine ortsfeste Anlagekante verrastende, derart schräg zur Einschubrichtung des Einbaugerätes ausgerichtete Rastnase aufweist, dass durch die federnde Anlage der Rastnase an die Anlagekante das Einbaugerät in Einschubrichtung vorgespannt und seine Einbaulage durch eine Anschlagfläche festgelegt ist, gegen die das Einbaugerät oder ein mit ihm fest verbundenes Bauteil im Einbauzustand anliegt, wobei zusätzlich zur Rastnase (11, 12) an dem Federarm (9, 10) der Haltefeder (5, 6) in Einschubrichtung des Einbaugerätes (2) gesehen hinter der Rastnase (11, 12) zumindest eine federnde Fangnase (14) vorgesehen ist, welche beim Herausbewegen des Einbaugerätes (2) aus der Einbauöffnung (3) nach einer Freigabe der Rastnase (11, 12) mit einer steilen Fangfläche (16) formschlüssig gegen die für die Rastnase (11, 12) bestimmte Haltefläche (20) zu gelangen vermag und diese hintergreift, **dadurch gekennzeichnet, dass** die Fangnase (14) an einer Längsseite des Federarmes (9, 10) durch einen umgebogenen Bereich gebildet ist und dass die Fangnase (14) an der Einschubseite eine flach ansteigende Abweisflanke (15) und daran anschließend die steile Fangfläche (16) hat.

2. Einbaugerät nach Anspruch 1, **dadurch gekennzeichnet, dass** an beiden Längsseiten des Federarmes (9, 10) jeweils eine Fangnase (14) vorgesehen ist.

3. Einbaugerät nach zumindest einem der vorangehenden Ansprüche, **dadurch gekennzeichnet, dass** die Rastnase (11, 12) auf ihrer im verrasteten Zustand gegen die Anlagekante (21) anliegenden Fläche mit Mittel zur Erhöhung der Haltekraft (Rillen 13) bei einer entgegengesetzt der Einschubrichtung auf das Einbaugerät (2) wirkenden Kraft versehen ist.

4. Einbaugerät nach Anspruch 3, **dadurch gekennzeichnet, dass** die Mittel zur Erhöhung der Haltekraft durch parallel zueinander und zur Anlagekante (21) verlaufende Rillen (13) in der Fläche der Rastnase (11, 12) gebildet sind.

5. Einbaugerät nach zumindest einem der vorangehenden Ansprüche, **dadurch gekennzeichnet, dass** das Einbaugerät (2) mit einem Frontteil (4) unmittelbar gegen einen als Anschlagfläche dienenden Randbereich (22) der Einbauöffnung (3) anliegt.

6. Einbaugerät nach zumindest einem der vorangehenden Ansprüche, **dadurch gekennzeichnet, dass** die Haltefeder (5, 6) symmetrisch aufgebaut ist und zu beiden Seiten einer in Einschubrichtung verlaufenden Symmetrieachse (7) jeweils einen Federarm (9, 10) mit der Rastnase (11, 12) und der Fangnase (14) aufweist, wobei jeweils das freie Ende der beiden Federarme (9, 10) zur der Einschubrichtung entgegengesetzten Seite weist.

7. Einbaugerät nach Anspruch 6, **dadurch gekennzeichnet, dass** an der der Einschubseite entgegengesetzten Seite auf der Symmetrieachse (7) und damit zwischen den Federarmen (9, 10) eine im montierten Zustand des Einbaugerätes (2) federnd gegen eine Fläche der Einbauöffnung (3) anliegende Federzunge (17) vorspringt.

## Claims

1. Built-in apparatus which is to be fitted into a built-in opening of a motor vehicle, for example a dashboard, and, on two opposite sides, is connected fixedly in each case to a retaining spring which in each case has at least one spring arm which has a latching lug, which latches into a positionally fixed bearing edge and is oriented obliquely with respect to the insertion direction of the built-in apparatus in such a manner that, by the latching lug bearing resiliently against the bearing edge, the built-in apparatus is prestressed in the insertion direction and its built-in position is defined by a stop surface against which the built-in apparatus or a component connected fixedly to it bears in the built-in state, in addition to the latching lug (11, 12) on the spring arm (9, 10) of the retaining spring (5, 6) there being provided, behind the latching lug (11, 12), as seen in the insertion direction of the built-in apparatus (2), at least one resilient intercepting lug (14) which, when the built-in apparatus (2) is moved out of the built-in opening (3), is able to pass, after release of the latching lug (11, 12), with a steep intercepting surface (16) in a form-fitting manner against the retaining surface (20) intended for the latching lug (11, 12), and engages behind the said retaining surface, **characterized in that** the intercepting lug (14) is formed on one longitudinal side of the spring arm (9, 10) by a bent-over region, and **in that** the intercepting lug (14) has, on the insertion side, a deflecting flank (15) which rises in a flat manner and, adjoining it, the steep intercepting surface (16).

2. Built-in apparatus according to Claim 1, **characterized in that** a respective intercepting lug (14) is provided on both longitudinal sides of the spring arm (9, 10).

3. Built-in apparatus according to at least one of the preceding claims, **characterized in that** the latching lug (11, 12), on its surface bearing against the bearing edge (21) in the latched state, is provided with means for increasing the retaining force (grooves 13) in the event of a force acting on the built-in apparatus (2) in a direction opposite to the insertion direction.

4. Built-in apparatus according to Claim 3, **characterized in that** the means for increasing the retaining force are formed by grooves (13) running parallel to one another and to the bearing edge (21) in the surface of the latching lug (11, 12).

5. Built-in apparatus according to at least one of the preceding claims, **characterized in that** the built-in apparatus (2) bears with a front part (4) directly against an edge region (22) of the built-in opening (3), which region serves as a stop surface.

6. Built-in apparatus according to at least one of the preceding claims, **characterized in that** the retaining spring (5, 6) is of symmetrical construction and has a respective spring arm (9, 10) with the latching lug (11, 12) and the intercepting lug (14) on both sides of an axis of symmetry (7) running in the insertion direction, the free end of the two spring arms (9, 10) pointing in each case to the side opposite the insertion direction.

7. Built-in apparatus according to Claim 6, **characterized in that**, on the side opposite the insertion side, a spring tongue (17) which, in the fitted state of the built-in apparatus (2), bears resiliently against a surface of the built-in opening (3) projects on the axis of symmetry (7) and therefore between the spring arms (9, 10).

## Revendications

1. Appareil à encastrer destiné à être monté dans une baie d'encastrement d'un véhicule automobile, à titre d'exemple, sur un tableau de bord, appareil à encastrer qui est lié d'une façon fixe, sur chacun de deux côtés se faisant face, à un ressort de retenue ayant au moins une branche de ressort comportant un talon de verrouillage, qui s'encliquette sur une arête fixe d'appui et qui est orienté en biais par rapport à la direction d'enfichage de l'appareil à encastrer, de telle manière que, en raison de l'appui élastique du talon de verrouillage sur l'arête d'appui, l'appareil à encastrer est soumis à une précontrainte dans la direction d'enfichage et sa position d'encastrement est définie par une surface de butée contre laquelle l'appareil à encastrer ou une pièce qui lui est fixée à demeure s'applique, dans son état encastré, alors que, en supplément au talon de verrouillage (11, 12), il est prévu, sur la branche de ressort (9, 10) du ressort de retenue (5, 6), derrière le talon de verrouillage (11, 12), vu dans le sens de l'enfichage de l'appareil à encastrer (2), au moins un talon de rattrapage élastique (14) dont une surface de retenue à forte pente (16) s'applique, après une libération du talon de verrouillage (11, 12), lors du mouvement de sortie de l'appareil à encastrer (2) hors de la baie d'encastrement (3), avec un engagement positif, contre la surface de retenue (20) prévue pour le talon de verrouillage (11, 12) et s'engage derrière celle-ci, **caractérisé par le fait que** le talon de rattrapage (14) est formé par une partie coudée sur un côté longitudinal de la branche de ressort (9, 10) et que le talon de rattrapage (14) a, sur le côté de l'enfichage, un flanc (15) à pente faible et, immédiatement après, une surface de rattrapage (16) à forte pente.

2. Appareil à encastrer selon la revendication 1 **caractérisé par le fait qu'**il est prévu, sur chacun des deux côtés longitudinaux de la branche de ressort (9, 10), un talon de rattrapage (14).

3. Appareil à encastrer selon au moins l'une des revendications précédentes **caractérisé par le fait que** le talon de verrouillage (11, 12) est muni, sur sa surface appliquée, dans l'état encliqueté, contre l'arête d'appui (21), de moyens destinés à augmenter la force de retenue (nervures 13) lorsqu'une force agit sur l'appareil à encastrer (2) dans le sens contraire à la direction d'enfichage.

4. Appareil à encastrer selon la revendication 3 **caractérisé par le fait que** les moyens destinés à augmenter la force de retenue sont formés par des nervures (13), parallèles les unes aux autres et à l'arête d'appui (21), dans la surface du talon de verrouillage (11, 12).

5. Appareil à encastrer selon au moins l'une des revendications précédentes **caractérisé par le fait que** l'appareil à encastrer (2) s'applique par une pièce avant (4) directement contre une zone de bordure (22) de la baie d'encastrement (3) servant de surface de butée.

6. Appareil à encastrer selon au moins l'une des revendications précédentes **caractérisé par le fait que** le ressort de retenue (5, 6) est symétrique et qu'il comporte, sur chacun des deux côtés d'un axe de symétrie (7) orienté dans la direction d'enfichage, un bras de ressort (9, 10) avec le talon de verrouillage (11, 12) et le talon de rattrapage (14), l'extrémité libre de chacune des deux branches de ressort (9, 10) étant d irigée vers le côté opposé à la direction d'enfichage.

7. Appareil à encastrer selon la revendication 6 **caractérisé par le fait que**, sur le côté opposé au côté d'enfichage, sur l'axe de symétrie (7) et, ainsi, entre les branches de ressort (9, 10), fait saillie une languette de ressort (17) appliquée, dans l'état m onté de l'appareil à encastrer ( 2), d'une façon élastique contre une surface de la baie d'encastrement (3).
